# EUROPEAN PATENT SPECIFICATION

(11) **EP 4 571 682 B1**
(45) Date of publication and mention of the grant of the patent: **29.07.2026**
(21) Application number: 23851719.7
(22) Date of filing: 04.08.2023
(51) Int. Cl.: G06V 40/12, G06V 40/13, G06F 1/16

(54) **ELECTRONIC DEVICE**
ELEKTRONISCHE VORRICHTUNG
DISPOSITIF ÉLECTRONIQUE

(30) Priority: 08.08.2022 CN 202210945780
(43) Date of publication of application: 18.06.2025
(73) Proprietor: Vivo Mobile Communication Co., Ltd., Dongguan, Guangdong 523863 (CN)
(72) Inventor: YAO, Qi, Dongguan, Guangdong 523863 (CN)
(74) Representative: Conti, Marco
(86) International application number: PCT/CN2023/111219
(87) International publication number: WO 2024/032498

(56) References cited:
- WO-A1-2021/209057
- WO-A1-2022/142704
- CN-A- 111 785 159
- CN-A- 113 014 766
- CN-A- 114 612 948
- CN-A- 115 359 517
- US-A1- 2021 004 558
- US-A1- 2021 133 421

## Description

### TECHNICAL FIELD

This application pertains to the field of communication device technologies, and specifically relates to an electronic device.

### BACKGROUND

With continuous development of technologies, to improve use experience when a user watches videos and plays games, a screen size of an electronic device is designed to be increasingly large. However, an increase in the screen size also means an increase in a size of the whole device, which results in poor portability of the electronic device. In this regard, the industry considers requirements of the foregoing two aspects by using a foldable screen technology.

In a related technology, an electronic device has a foldable screen and a cover display. In an unfolded state, the foldable screen of the electronic device can be used, and in a folded state, the cover display of the electronic device can be used. In the electronic device that uses an under-display fingerprint unlocking solution, under-display fingerprint modules need to be disposed on lower sides of both the foldable screen and the cover display. Consequently, this structure layout apparently complicates a structure of the electronic device.

Patent publication CN114612948 teaches a fingerprint identification function on a multi-screen display terminal. The fingerprint identification module comprises a reflection assembly and a fingerprint sensing assembly.

### SUMMARY

An objective of embodiments of this application is to provide an electronic device, so that a structure of the electronic device can be simplified.

To resolve the foregoing technical problem, this application is implemented as follows:
Embodiments of this application provide an electronic device. The device includes: a first housing; a second housing, rotatably connected to the first housing, to enable the electronic device to switch between a folded state and an unfolded state; a first display, where two ends of the first display are respectively connected to the first housing and the second housing, and can be folded or unfolded with relative rotation of the first housing and the second housing; a second display, disposed on a side, opposite to the first display, of the second housing, where both the first display and the second display are provided with light-transmitting areas; a fingerprint module, disposed in the first housing; and a dimming module, disposed in the second housing and located between the light-transmitting area of the first display and the light-transmitting area of the second display, where when the electronic device is in the unfolded state, the dimming module is in a light blocking state, and the fingerprint module performs fingerprint identification through the light-transmitting area of the first display; or when the electronic device is in the folded state, the dimming module is in a light-through state, and the fingerprint module performs fingerprint identification through the light-transmitting areas of the first display and the second display.

In the electronic device disclosed in embodiments of this application, the dimming module configured to adjust a light-through amount is disposed in the first housing. When the electronic device is in the unfolded state, a user may perform fingerprint identification through the first display, and the dimming module can prevent light from passing through, so that areas corresponding to the dimming module on the first display and the second display are non-light-transmitting areas, thereby optimizing display effect of the first display; or when the electronic device is in the folded state, a user may perform fingerprint identification through the second display, the dimming module can allow fingerprint light passing through the second display to pass through, and the fingerprint light passes through the light-transmitting area of the first display and is projected to the fingerprint module, to implement fingerprint identification.

In comparison with a related technology, the electronic device in embodiments of this application can implement a dual-screen fingerprint identification function of the foldable electronic device by setting only one fingerprint module, thereby effectively simplifying a structure of the electronic device.

### BRIEF DESCRIPTION OF DRAWINGS

FIG. 1 and FIG. 2 are respectively schematic diagrams of structures of an electronic device in an unfolded state and a folded state according to an embodiment of this application;
FIG. 3 is a first schematic diagram of an exploded structure of an electronic device according to an embodiment of this application;
FIG. 4 is a first sectional view of an electronic device according to an embodiment of this application;
FIG. 5 and FIG. 6 are respectively a first top view and a first bottom view of blocking an optical path by a dimming module according to an embodiment of this application;
FIG. 7 and FIG. 8 are respectively a first top view and a first bottom view of giving way to an optical path by a dimming module according to an embodiment of this application;
FIG. 9 is a second schematic diagram of an exploded structure of an electronic device according to an embodiment of this application;
FIG. 10 is a second sectional view of an electronic device according to an embodiment of this application;
FIG. 11 is a second top view of blocking an optical path by a dimming module according to an embodiment of this application;
FIG. 12 is a second top view of giving way to an optical path by a dimming module according to an embodiment of this application;
FIG. 13 is a third schematic diagram of an exploded structure of an electronic device according to an embodiment of this application;
FIG. 14 is a third sectional view of an electronic device according to an embodiment of this application;
FIG. 15 is a third top view of blocking an optical path by a dimming module according to an embodiment of this application; and
FIG. 16 is a third top view of giving way to an optical path by a dimming module according to an embodiment of this application.

Reference numerals:
100: first housing; 200: second housing; 210: first light-through hole;
300: first display; 310: first sub-screen; 320: second sub-screen;
400: second display; 500: fingerprint module;
600: dimming module; 610: substrate; 611: second light-through hole; 612: guide groove; 620: first driving assembly; 621: electrical heating component; 622: shape memory alloy part; 630: blade; 631: splicing corner; 632: fitting portion; 640: baffle; 641: rack portion; 650: second driving assembly; 651: electromagnet apparatus; 652: elastic member; 653: motor; 654: transmission gear;
700: light-transmitting support plate; 800: circuit board; 900: fingerprint identification area; 1000: rotating hinge.

### DESCRIPTION OF EMBODIMENTS

The following clearly describes technical solutions in embodiments of this application with reference to accompanying drawings in embodiments of this application. Apparently, the described embodiments are some but not all of embodiments of this application.

The terms "first", "second", and the like in this specification and the claims of this application are used to distinguish between similar objects instead of describing a specific order or sequence. It should be understood that the terms used in such a way are interchangeable in proper circumstances, so that embodiments of this application can be implemented in an order other than the order illustrated or described herein. Objects classified by "first", "second", and the like are usually of a same type, and a quantity of objects is not limited. For example, there may be one or more first objects. In addition, in this specification and the claims, "and/or" indicates at least one of connected objects, and a character "/" generally indicates an "or" relationship between associated objects.

The technical solutions disclosed in embodiments of this application are described in detail below with reference to the accompanying drawings.

To resolve a technical problem in the related technology that under-display fingerprint modules need to be disposed on lower sides of both a foldable screen and a cover display of an electronic device, and consequently a structure is excessively complex, embodiments of this application provide an electronic device.

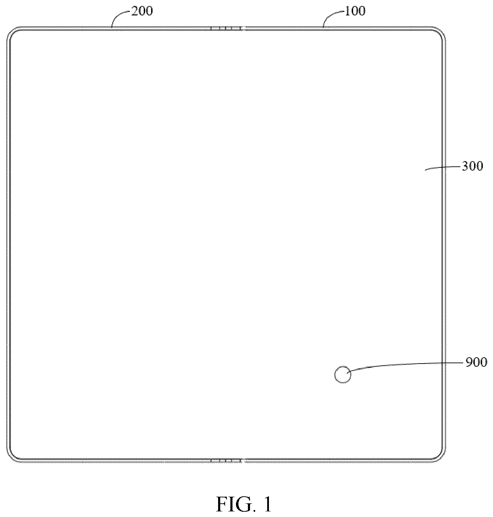

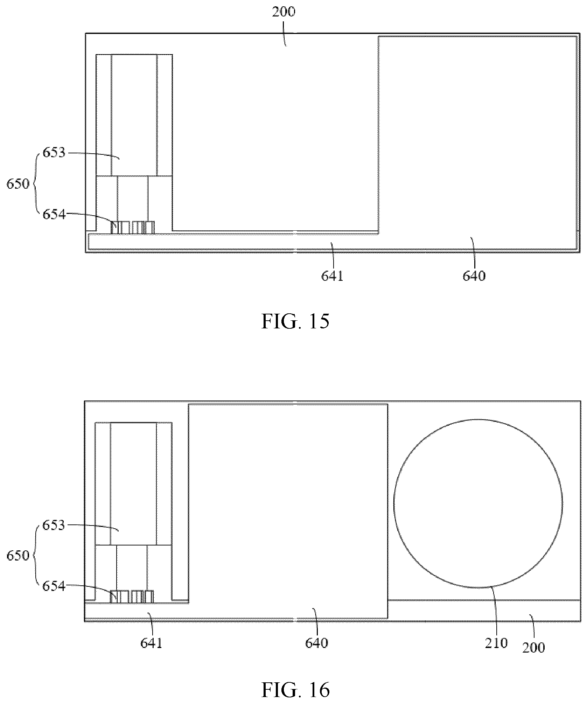

Refer to FIG. 1 to FIG. 16. The electronic device disclosed in embodiments of this application includes a first housing 100, a second housing 200, a first display 300, a second display 400, a fingerprint module 500, and a dimming module 600.

The first housing 100 and the second housing 200 are basic components of the electronic device, and can provide a mounting basis for components such as the first display 300, the second display 400, the fingerprint module 500, and the dimming module 600 in the electronic device.

The second housing 200 is rotatably connected to the first housing 100, that is, relative rotation can be generated between the first housing 100 and the second housing 200, so that the electronic device can switch between a folded state and an unfolded state. The electronic device may include a rotating hinge 1000, and the first housing 100 and the second housing 200 implement rotation fit through the rotating hinge 1000.

Two ends of the first display 300 are respectively connected to the first housing 100 and the second housing 200, and can be folded or unfolded with relative rotation of the first housing 100 and the second housing 200. The second display 400 is disposed on a side, opposite to the first display 300, of the second housing 200.

Specifically, the first display 300 is a flexible foldable screen of the electronic device, and relative to the first display 300, the second display 400 is a cover display of the electronic device. When the electronic device is in the unfolded state, a display area of the first display 300 is large, so that a requirement of a user for a large display is met; or when the electronic device is in the folded state, an overall size of the electronic device is small, so that a user can implement a display function of the electronic device through the second display 400, and it is convenient for the user to carry and hold the electronic device.

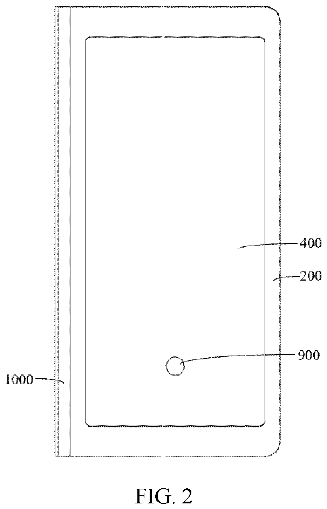

In embodiments of this application, a specific included angle between the first housing 100 and the second housing 200 when the electronic device is in the unfolded state or the folded state is not limited. Optionally, when the electronic device is in the unfolded state, the included angle between the first housing 100 and the second housing 200 is 180°, as shown in FIG. 1; or when the electronic device is in the folded state, the included angle between the first housing 100 and the second housing 200 is 0°, as shown in FIG. 2.

The first display 300 may include a first sub-screen 310 and a second sub-screen 320, the first sub-screen 310 is correspondingly connected to the first housing 100, and the second sub-screen 320 is correspondingly connected to the second housing 200. In this layout, the first housing 100 is a carrier of the first sub-screen 310, and the second housing 200 is a carrier of the second sub-screen 320. When the first housing 100 and the second housing 200 are unfolded or folded, the first sub-screen 310 and the second sub-screen 320 may be driven to be unfolded or folded. The first sub-screen 310 and the second sub-screen 320 may be independently displayed.

The first display 300 may further include a third sub-screen, and the first sub-screen 310 is connected to the second sub-screen 320 through the third sub-screen, so that the first sub-screen 310, the second sub-screen 320, and the third sub-screen jointly form the complete display area of the first display 300. The third sub-screen corresponds to an area between the first housing 100 and the second housing 200, and specifically may correspond to the rotating hinge 1000, so that the third sub-screen is deformed in a process of folding the electronic device. The third sub-screen may be independently displayed.

In addition, both the first display 300 and the second display 400 are provided with light-transmitting areas; the fingerprint module 500 is disposed in the first housing 100; and the dimming module 600 is disposed in the second housing 200 and is located between the light-transmitting area of the first display 300 and the light-transmitting area of the second display 400, where when the electronic device is in the unfolded state, the dimming module 600 is in a light blocking state, and the fingerprint module 500 performs fingerprint identification through the light-transmitting area of the first display 300; or when the electronic device is in the folded state, the dimming module 600 is in a light-through state, and the fingerprint module 500 performs fingerprint identification through the light-transmitting areas of the first display 300 and the second display 400.

Specifically, in embodiments of this application, the electronic device uses an optical fingerprint identification technology. The optical fingerprint identification technology means that when a finger presses a fingerprint identification area of the display, a built-in module of the display emits light to illuminate the fingerprint identification area, the light illuminating a fingerprint is reflected and passes through the display, and is projected to a fingerprint sensor inside the electronic device, and the fingerprint sensor compares the reflected light with pre-entered fingerprint image information, to perform identification determining.

The dimming module 600 is configured to adjust a light-through amount, and may be connected to a circuit board 800 of the electronic device. The light-transmitting areas of the first display 300 and the second display 400 are used to transmit light, so that the light illuminating the fingerprint can be smoothly transmitted to the corresponding display after being reflected, to be projected to the fingerprint module 500 (namely, the fingerprint sensor) inside the electronic device. Both the first sub-screen 310 and the second sub-screen 320 of the first display 300 have light-transmitting areas, so that the dimming module 600 is located between the light-transmitting area of the second sub-screen 320 of the first display 300 and the light-transmitting area of the second display 400. To ensure that fingerprint light can be smoothly propagated, the second housing 200 may be provided with a first light-through hole 210 corresponding to the light-transmitting area and the dimming module 600.

As shown in FIG. 1, when the electronic device is in the unfolded state, the user uses the first display 300, and the user may press the fingerprint identification area 900 of the first display 300. The area corresponds to the fingerprint module 500, and the light illuminating may pass through the light-transmitting area of the first display 300 and is smoothly reflected to the fingerprint module 500 in the first housing 100, to implement fingerprint identification. It should be noted that the light blocking state of the dimming module 600 is a state in which light transmission is prevented, and the dimming module 600 is located between the light-transmitting area of the first display 300 and the light-transmitting area of the second display 400. When the electronic device is in the unfolded state, an area that is of the first display 300 and that corresponds to the dimming module 600 is a non-light-transmitting area, so that a light-transmitting difference occurred between the area and another area of the first display 300 can be avoided, that is, a "perspectivity" problem is avoided, to ensure that an overall screen of the first display 300 is consistent in color, and optimal display effect is achieved.

As shown in FIG. 2, when the electronic device is in the folded state, the first display 300 is folded inside the electronic device, and the second display 400 is located outside the electronic device, so that the user can use the second display 400, and the user can press the second display 400 in the fingerprint identification area 900 preset on the second display 400. In addition, when the electronic device is in the folded state, the light-transmitting area of the second display 400 is correspondingly disposed with two light-transmitting areas (the light-transmitting areas of the first sub-screen 310 and the second sub-screen 320) of the first display 300, and the dimming module 600 is in the light-through state, that is, the dimming module 600 allows the fingerprint light to pass through, so that the light illuminating the fingerprint can sequentially pass through the light-transmitting areas of the second display 400, the second sub-screen 320, and the first sub-screen 310 and is smoothly reflected to the fingerprint module 500 in the first housing 100, to implement fingerprint identification.

In comparison with a related technology, the electronic device in embodiments of this application can implement a dual-screen fingerprint identification function of the foldable electronic device by setting only one fingerprint module 500, thereby effectively simplifying a structure of the electronic device undoubtedly. Specifically, the electronic device in embodiments of this application can reduce a quantity of fingerprint modules 500, so that stacking space inside the electronic device can be saved, a circuit layout can be reduced, and costs can be further reduced, thereby implementing a light and thin design of the electronic device.

In embodiments of this application, there are a plurality of types of dimming modules 600. For example, the dimming module 600 is an electro-deformation assembly. When the electronic device is in the unfolded state, the electro-deformation assembly is in a colored state, thereby implementing light blocking; or when the electronic device is in the folded state, the electro-deformation assembly is in a transparent state, thereby implementing light-through.

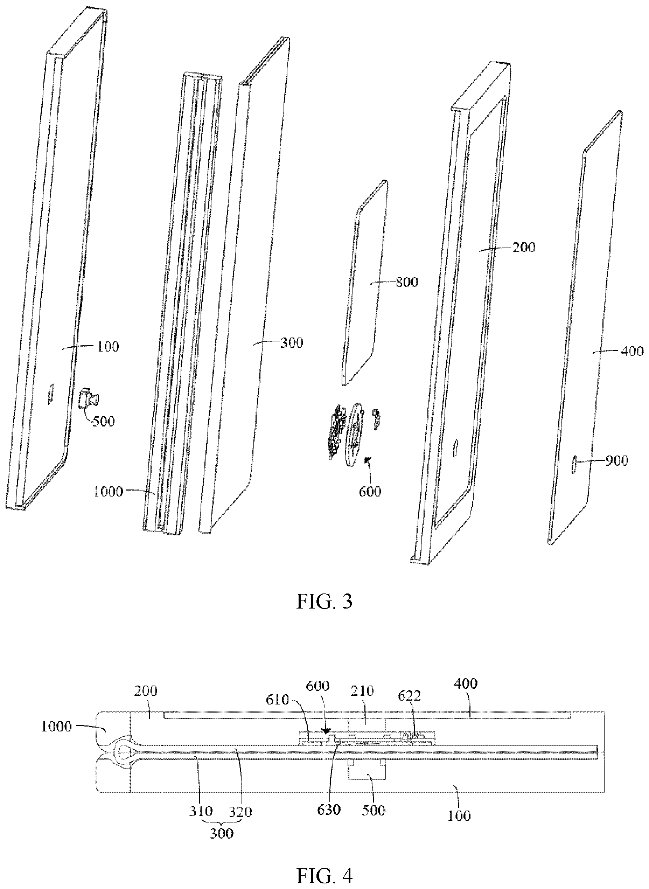

In another implementation solution of the dimming module 600, as shown in FIG. 3 to FIG. 8, the dimming module 600 may include a first driving assembly 620 and a plurality of blades 630, the plurality of blades 630 are arranged along a circumferential direction of an optical path of fingerprint light and are all movably disposed in the second housing 200 between a first position and a second position, and when the plurality of blades 630 are in the first position, the plurality of blades 630 are spliced with each other to block the optical path; or when the plurality of blades 630 are in the second position, the plurality of blades 630 give way to the optical path; and the first driving assembly 620 is connected to the plurality of blades 630 and is configured to drive the plurality of blades 630 to move.

In this structure layout, the first driving assembly 620 is configured to drive the blade 630, to enable the blade 630 to move between the first position and the second position. When the plurality of blades 630 are in the first position, the plurality of blades 630 block the optical path, that is, light is prevented from being propagated, so that the dimming module 600 is in the light blocking state; or when the plurality of blades 630 are in the second position, the plurality of blades 630 all give way to the optical path, so that light can be smoothly propagated, and the dimming module 600 is in the light-through state.

In such a solution that the plurality of blades 630 are spliced, an area surrounded by the plurality of blades 630 may form an avoidance hole through which the fingerprint light can pass, and the avoidance hole may change a size by switching the blades 630 between the first position and the second position, thereby changing a light-through amount of the fingerprint light. Because in the solution that the plurality of blades 630 are spliced, it is determined that the blades 630 all approximately move along a radial direction, the avoidance hole is always on the optical path of the fingerprint light. In this way, even if the avoidance hole is small by driving the blades 630 to be spliced, it can still be ensured that the fingerprint light passes through the avoidance hole, thereby ensuring that the fingerprint identification function can be smoothly implemented. Certainly, when less fingerprint light passes through, sensitivity of the fingerprint identification function decreases.

It can be learned that, in the solution that the plurality of blades 630 are spliced in embodiments of this application, the light-through amount of the fingerprint light may be adjusted by adjusting the size of the avoidance hole, and propagation of the fingerprint light on the optical path of the fingerprint light can be ensured. Finally, sensitivity of the fingerprint identification function of the electronic device is adjusted, to meet requirements of different users.

In addition, the plurality of blades 630 in embodiments of this application are arranged along the circumferential direction of the optical path of the fingerprint light, so that an excessively large size of the electronic device in a single direction can be avoided, thereby optimizing an internal structure layout of the device.

Further, as shown in FIG. 4 to FIG. 8, the dimming module 600 may further include a substrate 610, a second light-through hole 611 is provided on the substrate 610, the second light-through hole 611 is correspondingly provided with the optical path, and the blade 630 is movably disposed on the substrate 610; and one of the blade 630 and the substrate 610 is provided with a guide groove 612, and the other is provided with a fitting portion 632, and the fitting portion 632 is movably disposed in the guide groove 612.

In this setting, the second light-through hole 611 may be used for light to pass through, so that it can be ensured that the optical path can be smoothly formed inside the dimming module 600 when the dimming module 600 is in the light-through state. The substrate 610 is a carrier, of the blade 630, that is movably disposed, and the substrate 610 is used as an independent structure, so that it is more convenient to process a fitting structure with the blade 630.

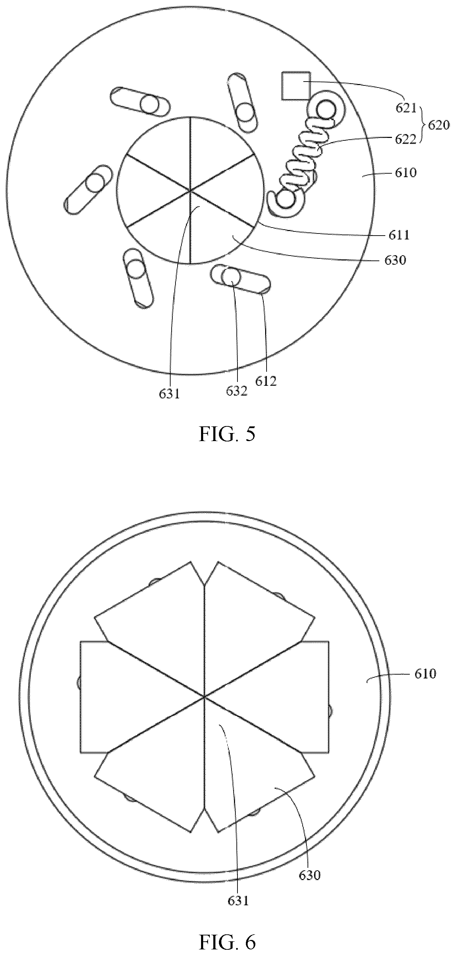

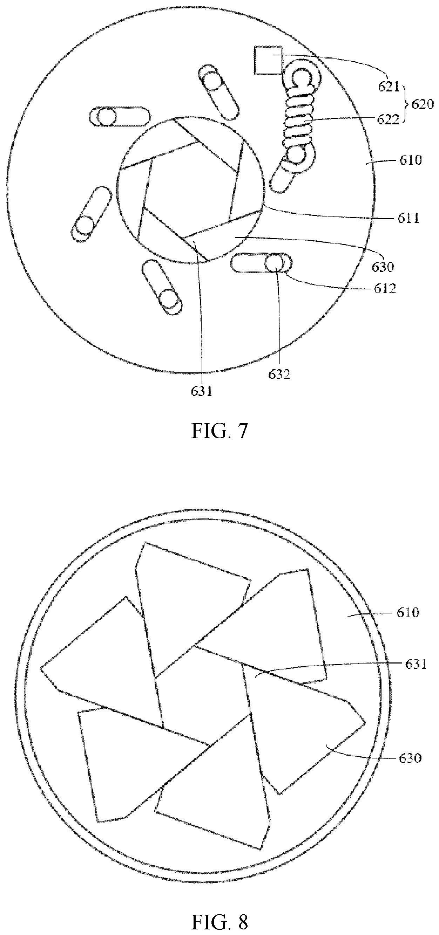

As shown in FIG. 5 and FIG. 7, the fitting portion 632 is disposed on the blade 630, and the guide groove 612 is provided on the substrate 610. Certainly, the fitting portion 632 may be provided on the substrate 610, and the guide groove 612 is provided on the blade 630. Specific setting positions of the fitting portion 632 and the guide groove 612 are not limited in embodiments of this application. The fitting portion 632 is generally a protruding structure. It should be understood that a fitting relationship between the fitting portion 632 and the guide groove 612 not only implements a movable setting of the blade 630 on the substrate 610, but also implements a guide function of the guide groove 612 for a movement action of the blade 630 through the fitting portion 632, to ensure that the blade 630 can accurately move between the first position and the second position, thereby improving accuracy of a moving path of the blade 630 and stability of accurate switching of the dimming module 600 between the light blocking state and the light-through state.

In another implementation solution, the blade 630 in embodiments of this application may directly fit with the second housing 200 through guided movement, and the substrate 610 does not need to be disposed on the electronic device.

Further, as shown in FIG. 5 to FIG. 8, the blade 630 has a splicing corner 631, the blade 630 includes a first side wall and a second side wall located on both sides of the splicing corner 631, the blade 630 abuts against splicing corners 631 of two adjacent blades 630 through the first side wall and the second side wall respectively, and the first driving assembly 620 is connected to one of the blades 630; and when the first driving assembly 620 drives the blade 630 to move toward the first position, the blade 630 pushes the blade 630 that abuts against the first side wall of the blade 630 to block the optical path; or when the first driving assembly 620 drives the blade 630 to move toward the second position, the blade 630 pushes the blade 630 that abuts against the second side wall of the blade 630 to give way to the optical path.

It should be understood that the blades 630 may be spliced at a vertex of the splicing corner 631, so that the blades 630 are completely spliced around by one circle, thereby ensuring that the optical path of the light is completely blocked. Specifically, each of the blades 630 may abut against splicing corners 631 of two adjacent blades 630 through the first side wall and the second side wall, to be specific, along the circumferential direction of the optical path of the fingerprint light, the plurality of blades 630 are sequentially arranged, and each of the blades 630 abuts against the adjacent blades 630 through the first side wall and the second side wall respectively.

In a process in which the blade 630 is driven to move from the second position to the first position, the blade 630 pushes the adjacent blade 630 to move through the first side wall, so that all the blades 630 along the circumferential direction of the optical path of the fingerprint light move toward the first position, thereby implementing switching of the dimming module 600 from the light-through state to the light blocking state. In a process in which the blade 630 is driven to move from the first position to the second position, the blade 630 pushes the adjacent blade 630 to move through the second side wall, so that all the blades 630 along the circumferential direction of the optical path of the fingerprint light move toward the second position, thereby implementing switching of the dimming module 600 from the light blocking state to the light-through state.

Apparently, the first driving assembly 620 in embodiments of this application drives one blade 630, and then the blade 630 can drive all blades 630 to move. In comparison with those in a solution that each blade 630 is configured with one driving apparatus, costs and stacking space inside the electronic device are effectively saved.

In embodiments of this application, a quantity of blades 630 is not limited. As shown in FIG. 6 and FIG. 8, there may be six blades 630, or there may be another quantity of blades 630 such as four or five.

Further, as shown in FIG. 4, FIG. 5, and FIG. 7, the first driving assembly 620 is an electro-deformation assembly, and the electro-deformation assembly drives the blade 630 to move through telescopic deformation. It should be understood that, the electro-deformation assembly may conveniently implement a driving function for the blade 630 by powering on or off, thereby facilitating switching of the dimming module 600 between the light blocking state and the light-through state. A structure of the electro-deformation assembly is simple, and the internal structure layout of the electronic device can be simplified.

Certainly, a specific type of the first driving assembly 620 is not limited in embodiments of this application. For example, the first driving assembly 620 may be a linear motor 653, a hydraulic telescopic part, or the like.

The electro-deformation assembly may include an electrical heating component 621 and a shape memory alloy part 622, the electrical heating component 621 is configured to heat the shape memory alloy part 622, and the shape memory alloy part 622 is connected to the blade 630. In this layout, the electrical heating component 621 is an excitation component of the shape memory alloy part 622, and an excitation signal is sent to the electrical heating component 621, so that the electrical heating component 621 can transmit energy to the shape memory alloy part 622, and the shape memory alloy part 622 implements a telescopic action, to drive the blade 630 to move. The shape memory alloy part 622 may be a shape memory alloy wire.

In addition, the electro-deformation assembly may further be made of an electroactive polymer (Electroactive Polymer, EAP), a piezoelectric material, or the like.

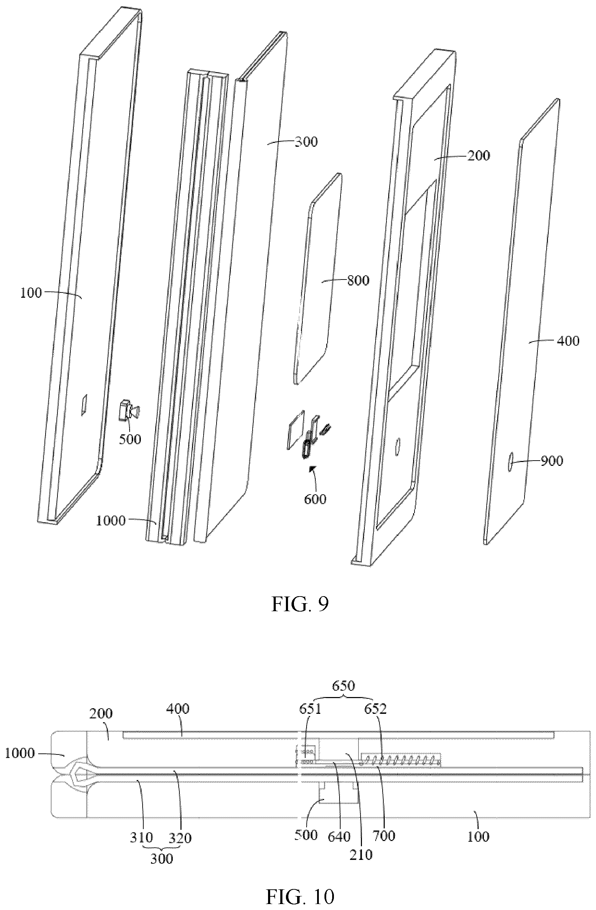

In another implementation solution of the dimming module 600, as shown in FIG. 9 to FIG. 16, the dimming module 600 may include a baffle 640 and a second driving assembly 650, the baffle 640 is movably disposed in the second housing 200 between a third position and a fourth position, and when the baffle 640 is in the third position, the baffle 640 blocks the optical path of the fingerprint light; or when the baffle 640 is in the fourth position, the baffle 640 gives way to the optical path; and the second driving assembly 650 is connected to the baffle 640 and is configured to drive the baffle 640 to move.

In this implementation solution, the second driving assembly 650 is a driving apparatus corresponding to the baffle 640. In a process in which the baffle 640 is driven to move from the fourth position to the third position, the baffle 640 gradually blocks the optical path of the fingerprint light, thereby implementing switching of the dimming module 600 from the light-through state to the light blocking state. In a process in which the baffle 640 is driven to move from the third position to the fourth position, the baffle 640 gradually gives way to the optical path of the fingerprint light, thereby implementing switching of the dimming module 600 from the light blocking state to the light-through state. In this way, a structure of the driving solution through the driving baffle 640 is simple, and the internal structure layout of the electronic device can be simplified.

In a specific implementation solution of the second driving assembly 650, as shown in FIG. 9 to FIG. 12, the second driving assembly 650 may include an electromagnet apparatus 651 and an elastic member 652, the baffle 640 is a magnetic mechanical part, and the electromagnet apparatus 651 and the elastic member 652 are respectively disposed on two opposite sides of the baffle 640; and one of the electromagnet apparatus 651 and the elastic member 652 is configured to drive the baffle 640 to move to the third position, and the other is configured to drive the baffle 640 to move to the fourth position.

It should be understood that, because the baffle 640 is a magnetic mechanical part, when the electromagnet apparatus 651 is powered on, the electromagnet apparatus 651 implements a driving function for the baffle 640 by using a magnetic field force. The elastic member 652 may store energy when being compressed. In this case, a resilient force may be applied to the baffle 640. The elastic member 652 may store energy when being stretched. In this case, a pulling force may be applied to the baffle 640. In both the two states, a driving function may be applied to the baffle 640.

The electromagnet apparatus 651 can change a size of the driving function through powering-on strength. Therefore, it is more convenient to control adjustment accuracy, and a structure of the electromagnetic driving solution is simple.

In embodiments of this application, a specific driving relationship between each of the electromagnet apparatus 651 and the elastic member 652 and the baffle 640 is not limited. As shown in FIG. 10 to FIG. 12, the elastic member 652 may be selected as a spring, or the elastic member 652 may be foam, rubber, an elastic polymer material, or the like.

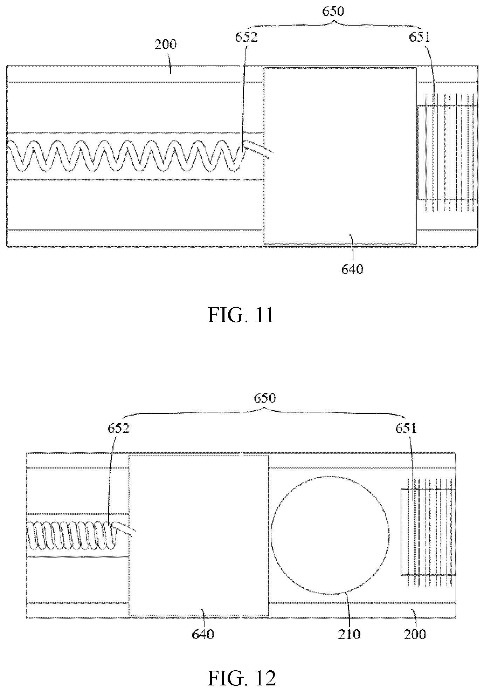

As shown in FIG. 11 and FIG. 12, when the electromagnet apparatus 651 is powered on, the electromagnet apparatus 651 applies an attraction force to the baffle 640 to drive the baffle 640 to move to the third position, and the elastic member 652 is in a stretched state and stores energy; or when the electromagnet apparatus 651 is powered off, the elastic member 652 retracts and releases energy to apply a pulling force to the baffle 640 to drive the baffle 640 to move to the fourth position.

In another implementation solution, when the electromagnet apparatus 651 is powered on, the electromagnet apparatus 651 may apply a repulsion force to the baffle 640 to drive the baffle 640 to move to the fourth position, and the elastic member 652 is in a compressed state and stores energy; or when the electromagnet apparatus is powered off, the elastic member 652 rebounds to extend and releases energy to apply a thrust force to the baffle 640 to drive the baffle 640 to move to the third position.

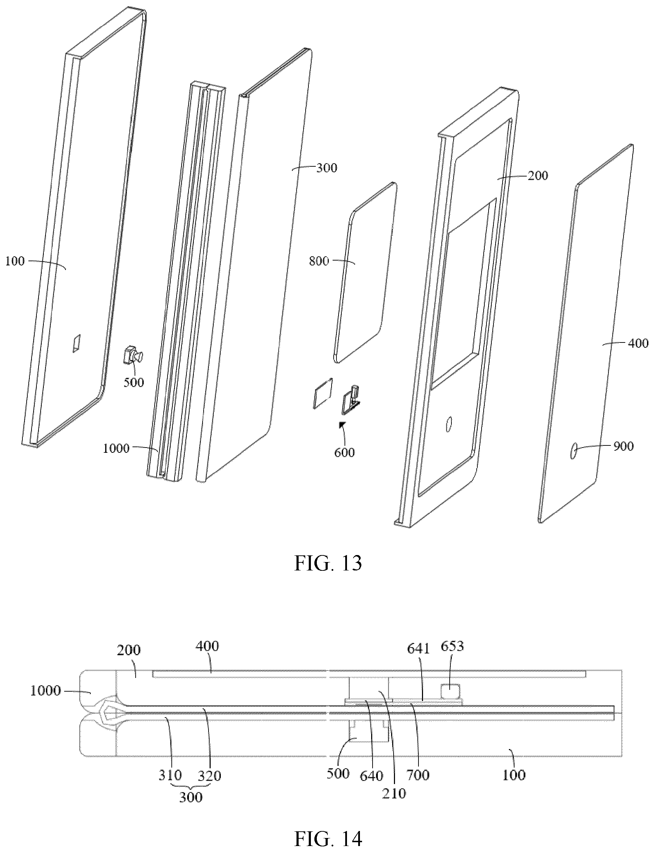

In another specific implementation solution of the second driving assembly 650, as shown in FIG. 13 to FIG. 16, the second driving assembly 650 may include a motor 653 and a transmission gear 654, the baffle 640 includes a rack portion 641 at one end, close to the motor 653, of the baffle 640, the transmission gear 654 is disposed at an output end of the motor 653, and the transmission gear 654 meshes with the rack portion 641.

It should be understood that the transmission gear 654 may rotate with the output end of the motor 653, and the rack portion 641 may move with the transmission gear 654, to drive the baffle 640 to move. Specifically, the baffle 640 may move between the third position and the fourth position by adjusting and controlling an output rotation direction of the motor 653 to be different. In the foregoing constructed gear-rack driving solution, the rack portion 641 moves in a straight line, so that relative rotation does not occur, thereby reducing a probability of interference with another component in a transmission process, and facilitating arrangement of another component in an internal environment of the device.

In an optional solution, as shown in FIG. 10 and FIG. 14, the electronic device may further include a light-transmitting support plate 700, the light-transmitting support plate 700 is disposed in the second housing 200 and is located between the dimming module 600 and the first display 300, and the first display 300 is attached to the light-transmitting support plate 700.

It should be understood that the light-transmitting support plate 700 may transmit the fingerprint light, so that it can be ensured that the fingerprint identification function can be smoothly implemented. An area in which the dimming module 600 is located belongs to an area with relative weak strength inside the second housing 200. In this case, the light-transmitting support plate 700 may improve the strength of the area, to optimize structure stability of the electronic device. When the dimming module 600 is an implementation solution such as splicing the blades 630 or moving the baffle 640, when the dimming module 600 is in the light-through state, a support function of the blade 630 or the baffle 640 is weakened, and the light-transmitting support plate 700 may always implement a good support function for the first display 300. Even if the first display 300 is a flexible foldable screen, better structure stability can be ensured.

The electronic device disclosed in embodiments of this application may be a smartphone, a tablet computer, an e-book reader, a wearable device (for example, a smart watch), a video game console, or the like. A type of the electronic device is not specifically limited in embodiments of this application.

Embodiments of this application are described above with reference to the accompanying drawings.

## Claims

1. An electronic device, comprising:
a first housing (100);
a second housing (200), rotatably connected to the first housing (100), to enable the electronic device to switch between a folded state and an unfolded state;
a first display (300), wherein two ends of the first display (300) are respectively connected to the first housing (100) and the second housing (200), and can be folded or unfolded with relative rotation of the first housing (100) and the second housing (200);
a second display (400), disposed on a side, opposite to the first display (300), of the second housing (200), wherein both the first display (300) and the second display (400) are provided with light-transmitting areas;
a fingerprint module (500), disposed in the first housing (100); and further **characterized by** comprising:
a dimming module (600), disposed in the second housing (200) and located between the light-transmitting area of the first display (300) and the light-transmitting area of the second display (400), wherein
when the electronic device is in the unfolded state, the dimming module (600) is in a light blocking state, and the fingerprint module (500) performs fingerprint identification through the light-transmitting area of the first display (300); when the electronic device is in the folded state, the dimming module (600) is in a light-through state, and the fingerprint module (500) performs fingerprint identification through the light-transmitting areas of the first display (300) and the second display (400).

2. The electronic device according to claim 1, wherein the dimming module (600) comprises a first driving assembly (620) and a plurality of blades (630), the plurality of blades (630) are arranged along a circumferential direction of an optical path of fingerprint light and are all movably disposed in the second housing (200) between a first position and a second position, and when the plurality of blades (630) are in the first position, the plurality of blades (630) are spliced with each other to block the optical path; when the plurality of blades (630) are in the second position, the plurality of blades (630) give way to the optical path; and the first driving assembly (620) is connected to the plurality of blades (630) and is configured to drive the plurality of blades (630) to move.

3. The electronic device according to claim 2, wherein the dimming module (600) further comprises a substrate (610), a second light-through hole (611) is provided on the substrate (610), the second light-through hole (611) is correspondingly provided with the optical path, and the blade (630) is movably disposed on the substrate (610); and
one of the blade (630) and the substrate (610) is provided with a guide groove (612), and the other is provided with a fitting portion (632), and the fitting portion (632) is movably disposed in the guide groove (612).

4. The electronic device according to claim 2, wherein the blade (630) has a splicing corner (631), the blade (630) comprises a first side wall and a second side wall located on both sides of the splicing corner (631), the blade (630) abuts against splicing corners (631) of two adjacent blades (630) through the first side wall and the second side wall respectively, and the first driving assembly (620) is connected to one of the blades (630); and
when the first driving assembly (620) drives the blade (630) to move toward the first position, the blade (630) pushes the blade (630) that abuts against the first side wall of the blade (630) to block the optical path; when the first driving assembly (620) drives the blade (630) to move toward the second position, the blade (630) pushes the blade (630) that abuts against the second side wall of the blade (630) to give way to the optical path.

5. The electronic device according to claim 4, wherein the first driving assembly (620) is an electro-deformation assembly, and the electro-deformation assembly drives the blade (630) to move through telescopic deformation.

6. The electronic device according to claim 5, wherein the electro-deformation assembly comprises an electrical heating component (621) and a shape memory alloy part (622), the electrical heating component (621) is configured to heat the shape memory alloy part (622), and the shape memory alloy part (622) is connected to the blade (630).

7. The electronic device according to claim 1, wherein the dimming module (600) comprises a baffle (640) and a second driving assembly (650), the baffle (640) is movably disposed in the second housing (200) between a third position and a fourth position, and when the baffle (640) is in the third position, the baffle (640) blocks an optical path of fingerprint light; or when the baffle (640) is in the fourth position, the baffle (640) gives way to the optical path; and the second driving assembly (650) is connected to the baffle (640) and is configured to drive the baffle (640) to move.

8. The electronic device according to claim 7, wherein the second driving assembly (650) comprises an electromagnet apparatus (651) and an elastic member (652), the baffle (640) is a magnetic mechanical part, and the electromagnet apparatus (651) and the elastic member (652) are respectively disposed on two opposite sides of the baffle (640); and one of the electromagnet apparatus (651) and the elastic member (652) is configured to drive the baffle (640) to move to the third position, and the other is configured to drive the baffle (640) to move to the fourth position.

9. The electronic device according to claim 8, wherein when the electromagnet apparatus (651) is powered on, the electromagnet apparatus (651) applies an attraction force to the baffle (640) to drive the baffle (640) to move to the third position; or when the electromagnet apparatus (651) is powered off, the elastic member (652) retracts to apply a pulling force to the baffle (640) to drive the baffle (640) to move to the fourth position.

10. The electronic device according to claim 7, wherein the second driving assembly (650) comprises a motor (653) and a transmission gear (654), the baffle (640) comprises a rack portion (641) disposed at one end, close to the motor (653), of the baffle (640), the transmission gear (654) is disposed at an output end of the motor (653), and the transmission gear (654) meshes with the rack portion (641).

11. The electronic device according to claim 1, wherein the electronic device further comprises a light-transmitting support plate (700), the light-transmitting support plate (700) is disposed in the second housing (200) and is located between the dimming module (600) and the first display (300), and the first display (300) is attached to the light-transmitting support plate (700).

## Patentansprüche

1. Elektronische Vorrichtung, umfassend:
ein erstes Gehäuse (100);
ein zweites Gehäuse (200), das drehbar mit dem ersten Gehäuse (100) verbunden ist, um der elektrischen Vorrichtung zu ermöglichen, zwischen einem eingeklappten Zustand und einem ausgeklappten Zustand zu wechseln;
eine erste Anzeige (300), wobei zwei Enden der ersten Anzeige (300) jeweils mit dem ersten Gehäuse (100) und dem zweiten Gehäuse (200) verbunden sind und mit jeweiliger Drehung des ersten Gehäuses (100) und des zweiten Gehäuses (200) ein- oder ausgeklappt werden können;
eine zweite Anzeige (400), die auf einer Seite des zweiten Gehäuses (200), die der der ersten Anzeige (300) gegenüberliegt, angeordnet ist, wobei sowohl die erste Anzeige (300) als auch die zweite Anzeige (400) mit lichtdurchlässigen Bereichen versehen sind;
ein Fingerabdruckmodul (500), das in dem ersten Gehäuse (100) angeordnet ist, und ferner **dadurch gekennzeichnet, dass** sie Folgendes umfasst:
ein Dimmmodul (600), das in dem zweiten Gehäuse (200) angeordnet ist und zwischen dem lichtdurchlässigen Bereich der ersten Anzeige (300) und dem lichtdurchlässigen Bereich der zweiten Anzeige (400) befindlich ist, wobei
sich das Dimmmodul (600) in einem lichtblockierenden Zustand befindet und das Fingerabdruckmodul (500) eine Fingerabdruckidentifizierung durch den lichtdurchlässigen Bereich der ersten Anzeige (300) durchführt, wenn sich die elektronische Vorrichtung in dem ausgeklappten Zustand befindet; sich das Dimmmodul (600) in einem Lichtdurchlasszustand befindet und das Fingerabdruckmodul (500) eine Fingerabdruckidentifizierung durch die lichtdurchlässigen Bereiche der ersten Anzeige (300) und der zweiten Anzeige (400) durchführt, wenn sich die elektronische Vorrichtung in dem eingeklappten Zustand befindet.

2. Elektronische Vorrichtung nach Anspruch 1, wobei das Dimmmodul (600) eine erste Antriebsbaugruppe (620) und eine Vielzahl von Lamellen (630) umfasst, wobei die Vielzahl von Lamellen (630) entlang einer Umfangsrichtung eines optischen Pfads von Fingerabdrucklicht angeordnet sind und alle in dem zweiten Gehäuse (200) zwischen einer ersten Position und einer zweiten Position bewegbar angeordnet sind, und die Vielzahl von Lamellen (630), wenn sich die Vielzahl von Lamellen (630) in der ersten Position befinden, einander überlappend angeordnet sind, um den optischen Pfad zu blockieren, und die Vielzahl von Lamellen (630), wenn sich die Vielzahl von Lamellen (630) in der zweiten Position befinden, den optischen Pfad freigeben, und wobei die erste Antriebsbaugruppe (620) mit der Vielzahl von Lamellen (630) verbunden ist und ausgelegt ist, um die Vielzahl von Lamellen (630) in Bewegung zu versetzen.

3. Elektronische Vorrichtung nach Anspruch 2, wobei das Dimmmodul (600) ferner ein Substrat (610) umfasst, ein zweites Lichtdurchlassloch (611) auf dem Substrat (610) vorgesehen ist, das zweite Lichtdurchlassloch (611) entsprechend mit dem optischen Pfad versehen ist und die Lamelle (630) bewegbar auf dem Substrat (610) angeordnet ist, und
wobei entweder die Lamelle (630) oder das Substrat (610) mit einer Führungsnut (612) versehen ist und das andere Element mit einem Passungsabschnitt (632) versehen ist und der Passungsabschnitt (632) bewegbar in der Führungsnut (612) angeordnet ist.

4. Elektronische Vorrichtung nach Anspruch 2, wobei die Lamelle (630) eine Fügeecke (631) aufweist, die Lamelle (630) eine erste Seitenwand und eine zweite Seitenwand umfasst, die auf beiden Seiten der Fügeecke (631) befindlich sind, die Lamelle (630) an Fügeecken (631) zweier benachbarter Lamellen (630) jeweils durch die erste Seitenwand und die zweite Seitenwand anliegt und die erste Antriebsbaugruppe (620) mit einer der Lamellen (630) verbunden ist, und
wobei die Lamelle (630), wenn die erste Antriebsbaugruppe (620) die Lamelle (630) in Richtung der ersten Position in Bewegung versetzt, die Lamelle (630), die an der ersten Seitenwand der Lamelle (630) anliegt, so drückt, dass der optische Pfad blockiert wird, wobei die Lamelle (630), wenn die erste Antriebsbaugruppe (620) die Lamelle (630) in Richtung der zweiten Position in Bewegung versetzt, die Lamelle (630), die an der zweiten Seitenwand der Lamelle (630) anliegt, so drückt, dass der optische Pfad freigegeben wird.

5. Elektronische Vorrichtung nach Anspruch 4, wobei die erste Antriebsbaugruppe (620) eine Baugruppe zur elektroinduzierten Verformung ist und die Baugruppe zur elektroinduzierten Verformung die Lamelle (630) durch teleskopische Verformung in Bewegung versetzt.

6. Elektronische Vorrichtung nach Anspruch 5, wobei die Baugruppe zur elektroinduzierten Verformung eine elektrische Heizkomponente (621) und ein Formgedächtnislegierungsteil (622) umfasst, wobei die elektrische Heizkomponente (621) ausgelegt ist, um das Formgedächtnislegierungsteil (622) zu erhitzen, und das Formgedächtnislegierungsteil (622) mit der Lamelle (630) verbunden ist.

7. Elektronische Vorrichtung nach Anspruch 1, wobei das Dimmmodul (600) eine Blende (640) und eine zweite Antriebsbaugruppe (650) umfasst, wobei die Blende (640) in dem zweiten Gehäuse (200) zwischen einer dritten Position und einer vierten Position bewegbar angeordnet ist und die Blende (640), wenn sich die Blende (640) in der dritten Position befindet, einen optischen Pfad von Fingerabdrucklicht blockiert, oder die Blende (640), wenn sich die Blende (640) in der vierten Position befindet, den optischen Pfad freigibt, und wobei die zweite Antriebsbaugruppe (650) mit der Blende (640) verbunden ist und ausgelegt ist, um die Blende (640) in Bewegung zu versetzen.

8. Elektronische Vorrichtung nach Anspruch 7, wobei die zweite Antriebsbaugruppe (650) eine Elektromagneteinrichtung (651) und ein elastisches Element (652) umfasst, die Blende (640) ein magnetisches mechanisches Teil ist und die elektromagnetische Einrichtung (651) und das elastische Element (652) jeweils auf zwei entgegengesetzten Seiten der Blende (640) angeordnet sind, und wobei entweder die elektromagnetische Einrichtung (651) oder das elastische Element (652) ausgelegt ist, um die Blende (640) zu der dritten Position in Bewegung zu versetzen, und das andere Element ausgelegt ist, um die Blende (640) zu der vierten Position in Bewegung zu versetzen.

9. Elektronische Vorrichtung nach Anspruch 8, wobei die elektromagnetische Einrichtung (651), wenn die elektromagnetische Einrichtung (651) mit Strom versorgt wird, eine Anziehungskraft auf die Blende (640) ausübt, sodass die Blende (640) zu der dritten Position in Bewegung versetzt wird, oder das elastische Element (652), wenn die Stromversorgung der elektromagnetischen Einrichtung (651) unterbrochen wird, einfährt, um eine Zugkraft auf die Blende (640) auszuüben, sodass die Blende (640) zu der vierten Position in Bewegung versetzt wird.

10. Elektronische Vorrichtung nach Anspruch 7, wobei die zweite Antriebsbaugruppe (650) einen Motor (653) und ein Getriebezahnrad (654) umfasst, die Blende (640) einen Zahnstangenabschnitt (641) umfasst, der an einem Ende der Blende (640) in der Nähe des Motors (653) angeordnet ist, das Getriebezahnrad (654) an einem Ausgangsende des Motors (653) angeordnet ist und das Getriebezahnrad (654) mit dem Zahnstangenabschnitt (641) kämmt.

11. Elektronische Vorrichtung nach Anspruch 1, wobei die elektronische Vorrichtung ferner eine lichtdurchlässige Stützplatte (700) umfasst, die lichtdurchlässige Stützplatte (700) in dem zweiten Gehäuse (200) angeordnet ist und zwischen dem Dimmmodul (600) und der ersten Anzeige (300) befindlich ist und die erste Anzeige (300) an der lichtdurchlässigen Stützplatte (700) angebracht ist.

## Revendications

1. Dispositif électronique, comprenant :
un premier boîtier (100) ;
un second boîtier (200), relié de manière rotative au premier boîtier (100), pour permettre au dispositif électronique de basculer entre un état plié et un état déplié ;
un premier écran (300), dans lequel deux extrémités du premier écran (300) sont respectivement reliées au premier boîtier (100) et au second boîtier (200), et peuvent être pliées ou dépliées avec une rotation relative du premier boîtier (100) et du second boîtier (200) ;
un second écran (400), disposé sur un côté, opposé au premier écran (300), du second boîtier (200), dans lequel à la fois le premier écran (300) et le second écran (400) sont pourvus de zones de transmission de lumière ;
un module d'empreintes digitales (500), disposé dans le premier boîtier (100) ; et **caractérisé en outre en ce qu'**il comprend :
un module de gradation (600), disposé dans le second boîtier (200) et situé entre la zone de transmission de la lumière du premier écran (300) et la zone de transmission de la lumière du second écran (400), dans lequel
lorsque le dispositif électronique est dans l'état déplié, le module de gradation (600) est dans un état de blocage de lumière, et le module d'empreintes digitales (500) effectue une identification d'empreintes digitales à travers la zone de transmission de lumière du premier écran (300) ; lorsque le dispositif électronique est dans l'état plié, le module de gradation (600) est dans un état de passage de lumière, et le module d'empreintes digitales (500) effectue une identification d'empreintes digitales à travers les zones de transmission de lumière du premier écran (300) et du second écran (400).

2. Dispositif électronique selon la revendication 1, dans lequel le module de gradation (600) comprend un premier ensemble d'entraînement (620) et une pluralité de lames (630), la pluralité de lames (630) est agencée le long d'une direction circonférentielle d'un chemin optique de lumière d'empreintes digitales et les lames sont toutes disposées de manière mobile dans le second boîtier (200) entre une première position et une deuxième position, et lorsque la pluralité de lames (630) est dans la première position, la pluralité de lames (630) est emboîté les unes dans les autres pour bloquer le chemin optique ; lorsque la pluralité de lames (630) est dans la deuxième position, la pluralité de lames (630) cède la place au chemin optique ; et le premier ensemble d'entraînement (620) est relié à la pluralité de lames (630) et est configuré pour entraîner le déplacement de la pluralité de lames (630).

3. Dispositif électronique selon la revendication 2, dans lequel le module de gradation (600) comprend en outre un substrat (610) ; un second trou de passage de lumière (611) est prévu sur le substrat (610), le second trou de passage de lumière (611) est prévu de manière correspondante avec le chemin optique, et la lame (630) est disposée de manière mobile sur le substrat (610) ; et
l'un de la lame (630) et du substrat (610) est pourvu d'une rainure de guidage (612), et l'autre est pourvu d'une portion d'ajustement (632), et la portion d'ajustement (632) est disposée de manière mobile dans la rainure de guidage (612).

4. Dispositif électronique selon la revendication 2, dans lequel la lame (630) est pourvue d'un coin d'emboîtement (631), la lame (630) comprend une première paroi latérale et une seconde paroi latérale situées des deux côtés du coin d'emboîtement (631), la lame (630) bute contre les points d'emboîtement (631) de deux lames (630) adjacentes à travers la première paroi latérale et la seconde paroi latérale respectivement, et le premier ensemble d'entraînement (620) est relié à l'une des lames (630) ; et
lorsque le premier ensemble d'entraînement (620) entraîne le déplacement de la lame (630) vers la première position, la lame (630) pousse la lame (630) qui bute contre la première paroi latérale de la lame (630) pour bloquer le chemin optique ; lorsque le premier ensemble d'entraînement (620) entraîne le déplacement de la lame (630) vers la deuxième position, la lame (630) pousse la lame (630) qui bute contre la seconde paroi latérale de la lame (630) pour céder la place au chemin optique.

5. Dispositif électronique selon la revendication 4, dans lequel le premier ensemble d'entraînement (620) est un ensemble d'électro-déformation, et l'ensemble d'électro-déformation entraîne le déplacement de la lame (630) par déformation télescopique.

6. Dispositif électronique selon la revendication 5, dans lequel l'ensemble d'électro-déformation comprend un composant de chauffage électrique (621) et une partie en alliage à mémoire de forme (622) ; le composant de chauffage électrique (621) est configuré pour chauffer la partie en alliage à mémoire de forme (622), et la partie en alliage à mémoire de forme (622) est reliée à la lame (630).

7. Dispositif électronique selon la revendication 1, dans lequel le module de gradation (600) comprend un obturateur (640) et un second ensemble d'entraînement (650) ; l'obturateur (640) est disposé de manière mobile dans le second boîtier (200) entre une troisième position et une quatrième position, et lorsque l'obturateur (640) est dans la troisième position, l'obturateur (640) bloque un trajet optique de lumière d'empreintes digitales ; ou lorsque l'obturateur (640) est dans la quatrième position, l'obturateur (640) cède la place au trajet optique ; et le second ensemble d'entraînement (650) est relié à l'obturateur (640) et est configuré pour entraîner le déplacement de l'obturateur (640).

8. Dispositif électronique selon la revendication 7, dans lequel le second ensemble d'entraînement (650) comprend un appareil à électro-aimant (651) et un élément élastique (652) ; l'obturateur (640) est une partie mécanique magnétique, et l'appareil à électro-aimant (651) et l'élément élastique (652) sont respectivement disposés sur deux côtés opposés de l'obturateur (640) ; et l'un de l'appareil à électro-aimant (651) et de l'élément élastique (652) est configuré pour entraîner le déplacement de l'obturateur (640) vers la troisième position, et l'autre est configuré pour entraîner le déplacement de l'obturateur (640) vers la quatrième position.

9. Dispositif électronique selon la revendication 8, dans lequel lorsque l'appareil à électro-aimant (651) est mis sous tension, l'appareil à électro-aimant (651) applique une force d'attraction à l'obturateur (640) pour entraîner le déplacement de l'obturateur (640) vers la troisième position ; ou lorsque l'appareil à électro-aimant (651) est mis hors tension, l'élément élastique (652) se rétracte pour appliquer une force de traction à l'obturateur (640) pour entraîner le déplacement de l'obturateur (640) vers la quatrième position.

10. Dispositif électronique selon la revendication 7, dans lequel le second ensemble d'entraînement (650) comprend un moteur (653) et un engrenage de transmission (654), l'obturateur (640) comprend une portion de crémaillère (641) disposée à une extrémité, à proximité du moteur (653), de l'obturateur (640) ; l'engrenage de transmission (654) est disposé à une extrémité de sortie du moteur (653), et l'engrenage de transmission (654) s'engrène avec la portion de crémaillère (641).

11. Dispositif électronique selon la revendication 1, dans lequel le dispositif électronique comprend en outre une plaque de support de transmission de lumière (700), la plaque de support de transmission de lumière (700) est disposée dans le second boîtier (200) et est située entre le module de gradation (600) et le premier écran (300), et le premier écran (300) est fixé à la plaque de support de transmission de lumière (700).
